# EUROPÄISCHE PATENTSCHRIFT

(11) **EP 2 837 451 B1**
(45) Veröffentlichungstag und Bekanntmachung des Hinweises auf die Patenterteilung: **07.08.2019**
(21) Anmeldenummer: 13180712.5
(22) Anmeldetag: 16.08.2013
(51) Int. Cl.: B23B 31/28

(54) **Verfahren zur Durchführung eines Kopplungsvorgangs**
Method for performing a coupling process
Procédé destiné à l'exécution d'un processus d'accouplement

(43) Veröffentlichungstag der Anmeldung: 18.02.2015
(73) Patentinhaber: SMW-AUTOBLOK Spannsysteme GmbH, 88074 Meckenbeuren (DE)
(72) Erfinder: Maurer Eckhard, 88094 Oberteuringen (DE)
(74) Vertreter: Zech, Stefan Markus

(56) Entgegenhaltungen:
- EP-A1- 2 295 176
- EP-A1- 2 548 681
- EP-B1- 2 384 839
- DE-A1- 3 314 629
- DE-A1- 4 015 261

## Beschreibung

Die Erfindung betrifft ein Verfahren zur Durchführung eines Kopplungsvorgangs zwischen einem Motor und auf eine Zug- und/oder Druckstange einwirkenden Getriebemitteln in einer Spanneinrichtung für eine Werkzeugmaschine, wobei die Zug- und/oder Druckstange im Betrieb der Spanneinrichtung mitumläuft und Spannvorgänge durch axiale Verschiebung der Zug- und/oder Druckstange bewirkt werden, indem eine durch einen Motor erzeugte Drehbewegung über die Getriebemittel, beispielsweise über einen Spindeltrieb oder einen Planetenrollengewindetrieb, an der Zug- und/oder Druckstange in eine axiale Verschiebung und/oder axiale Kraft übersetzt werden, wobei die Kopplungseinrichtung ein antriebsseitiges Zahnrad sowie ein abtriebsseitiges Zahnrad umfasst, die über eine vorgegebene Verschiebestrecke S verfahrbar und somit in Eingriff (Koppelstellung) bzw. außer Eingriff (Ruhestellung) bringbar sind, nach den Merkmalen des Anspruchs 1.

Um Spannvorgänge auszulösen, ist es grundsätzlich notwendig, eine axiale Kraft auf die Zug- und/oder Druckstange aufzubringen, wobei aber das Problem besteht, dass die Zug- und/oder Druckstange im normalen Betrieb der Werkzeugmaschine mit umläuft. Insofern kann ein Motor vorgesehen werden, der bedarfsweise die axiale Kraft auf die Zug- und/oder Druckstange aufzubringen in der Lage ist und der permanent mit an der Zug- und/oder Druckstange angreifenden Getriebemitteln gekoppelt bleibt. Allerdings muss in diesem Fall der Motor permanent mit der Zug- und/oder Druckstange umlaufen, wie dies in einem Ausführungsbeispiel der DE 33 14 629 vorgeschlagen wird. Das Vorsehen eines permanent mitumlaufenden Motors ist jedoch sowohl von der Konstruktion als auch vom Betrieb her aufwendig bzw. nachteilig, so dass zahlreiche Lösungen im Stand der Technik eine Kopplungseinrichtung dergestalt vorsehen, dass der Motor nicht mit der Zug- und/oder Druckstange umläuft und in normaler Betriebsposition (Ruhestellung) ausgekoppelt ist und nur dann, wenn ein Spannvorgang erforderlich ist, mit den Getriebemitteln, die an der Zug- und/oder Druckstange angreifen, drehmomentschlüssig verbunden wird (Koppelstellung). Auch für eine derartige Ausgestaltung werden im Stand der Technik verschiedene Ausgestaltungen vorgeschlagen. Es wird diesbezüglich erneut auf die DE 33 14 629 C2 sowie auf die EP 2 384 839 B1, EP 2 311 589 B1 sowie die EP 2 548 681 A1 verwiesen.

Gegenüber dem Stand der Technik besteht die Aufgabe der vorliegenden Erfindung darin, ein Verfahren vorzuschlagen, bei dem der Kopplungsvorgang noch zuverlässiger und definierter, ggf. auch bei umlaufender Zug- und/oder Druckstange durchführbar ist.

Diese Aufgaben werden alternativ oder kumulativ mit einem Verfahren nach den Merkmalen des Anspruchs 1 gelöst. Vorteilhafte Weiterbildungen sind in den Unteransprüchen angegeben. Eine Kernüberlegung besteht zunächst darin, vor, während oder nach dem Annäherungsprozess Daten zu erfassen, um den Annäherungsprozess zu überwachen bzw. zu steuern.

In einer ersten Ausgestaltung wird für diesen Annäherungsprozess von motorseitigem Zahnrad und getriebeseitigem Zahnrad, um diese in Eingriff bzw. in Koppelstellung zu bringen, ein Überwachungsschritt vorgeschlagen, um zu überprüfen, ob motorseitiges Zahnrad und getriebeseitiges Zahnrad in Eingriff gekommen sind. In Abhängigkeit des Ergebnisses des Überwachungsschritts wird im Anschluss daran ggf. in einem Lagekorrekturschritt eine Lagekorrektur vorgenommen.

Es wird noch ein weiteres Verfahren zur Lösung der Aufgabe vorgeschlagen, das alternativ oder ergänzend durchgeführt werden kann. Dieses Verfahren sieht die Durchführung eines Koppelvorgangs im Betrieb der Werkzeugmaschine, während die Zug- und/oder Druckstange mit vorgegebener Drehzahl N_{Z} umläuft, mit einem nicht mit der Zug- und/oder Druckstange umlaufenden Motor in einen Synchronisationsprozess vor, wobei der Synchronisationsprozess das Erfassen der Drehzahl N_{Z} der Zug- und/oder Druckstange, das Ansteuern und ggf. Überwachen des Motors, dass dieser mit einer N_{Z} entsprechenden Drehzahl N_{M} umlauft und das Annähern und Koppeln des motorseitigen Zahnrads und des getriebeseitigen Zahnrads, wenn N_{Z} = N_{M} sichergestellt ist, umfasst.

Das letztgenannte Verfahren kann bevorzugtermaßen auch mit dem erstgenannten Verfahren kombiniert durchgeführt werden, d.h. das Annähern und Koppeln des motorseitigen Zahnrads und des getriebeseitigen Zahnrads, wenn N_{Z}=N_{M} sichergestellt ist, nach dem letztgenannten Verfahren kann in einem Annäherungsprozess nach dem erstgenannten Verfahren durchgeführt werden.

Wenn bei dem vorgeschlagenen Koppelvorgang bei umlaufender Zug- und/oder Druckstange anschließend ein Spannvorgang durchgeführt werden soll, wird bevorzugtermaßen nach dem Ineingriffbringen von motorseitigem Zahnrad und getriebeseitigem Zahnrad der Motor derart angesteuert, dass er mit einer gegenüber der Drehzahl N_{Z} der Zug- und/oder Druckstange geringfügig erhöhten Drehzahl N_{M}↗ bzw. einer geringfügig reduzierten Drehzahl N_{M}↘ betrieben wird. Auf die Zug- und/oder Druckstange kann so eine axiale Kraft aufgebracht werden, auch wenn diese im Betrieb der Werkzeugmaschine mit ihr umläuft.

Bevorzugtermaßen ist vorgesehen, dass der Motor zur Durchführung einer Spannkraftveränderung über eine vorgegebene Zeitspanne und/oder über eine vorgegebene Umdrehungszahl ΔN_{M} und/oder bis eine gewünschte neue Soll-Federkraft F_{Soll} beispielsweise über Sensoreinrichtungen detektiert wird, betrieben wird. Diese Ansteuerung des Motors kann sowohl eingesetzt werden, wenn der Spannvorgang in einem Betriebszustand durchgeführt wird, in dem die Zug- und/oder Druckstange nicht umläuft, als auch in einem Zustand, in der die Zug- und/oder Druckstange mit der Werkzeugmaschine umläuft. Im letztgenannten Fall handelt es sich um die vorgegebene Umdrehungszahl ΔN_{M} nicht um die absolute Umdrehungszahl des Motors N_{M}, sondern um die Differenzumdrehungszahl zwischen der Umdrehungszahl des Motors N_{M} und der Umdrehungszahl der Zug- und/oder Druckstange N_{Z}.

In einer bevorzugten Ausgestaltung ist vorgesehen, dass die Kopplungseinrichtung elektromotorische Aktuatoren umfasst, die zur Durchführung des Kopplungsvorgangs elektrisch angesteuert werden. In der konkreten Ausgestaltung können die elektromotorischen Aktuatoren ein oder mehrere Elektromotoren umfassen, die einen Exzenter antreiben, wobei die Drehung des Exzenters eine axiale Verstellung innerhalb der Kopplungseinrichtung bewirkt.

In einer weiterhin bevorzugten Ausgestaltung ist der Motor als Elektromotor ausgebildet und wird zur Durchführung des Kopplungsvorgangs elektrisch angesteuert.

Das erfindungsgemäße Verfahren sieht zweckmäßiger weiterhin vor, dass erfasst wird, ob das oder die verschiebbaren Zahnräder eine Endstellung eingenommen haben.

Weiterhin kann das erfindungsgemäße Verfahren alternativ oder zusätzlich vorsehen, dass die jeweils aktuelle Position p₁(t), p₂(t) des oder der Zahnräder erfasst werden, um den Annäherungsprozess und/oder den Synchronisationsprozess zu steuern.

Bei dem vorliegenden Verfahren kann die aktuelle Drehzahl N_{Z} der Zug- und/oder Druckstange mittels an oder in der Spanneinrichtung angeordneter Sensoren erfasst oder von der Werkzeugmaschine übermittelt werden. Die Drehzahl N_{M} des Motors kann bei dem vorliegenden Verfahren mittels an oder in der Spanneinrichtung angeordneter Sensoren erfasst oder direkt von der Motorsteuerung übermittelt werden.

In einer bevorzugten Ausgestaltung des oder der Verfahren ist vorgesehen, dass der Lagekorrekturschritt ein Verdrehen des motorseitigen Zahnrads relativ zum getriebeseitigen Zahnrad umfasst und diese anschließend erneut aufeinander zu bewegt werden, um sie in Koppelstellung zu bringen. Unter einem Verdrehen des motorseitigen Zahnrads relativ zum getriebeseitigen Zahnrad kann ein kurzzeitiges, aber nicht näher überwachtes, Verdrehen verstanden werden. Alternativ kann aber auch ein inkrementelles bzw. dekrementelles Verdrehen dergestalt vorgesehen sein, dass eine Verdrehung über einen Winkel α entspricht, der n * dem Winkelabstand benachbarter Zähne + einem halben Winkelabstand erfolgt, wobei n eine ganze Zahl aus 0, 1, 2, ... ist. Wird um eine solche Winkellage verdreht, wird sichergestellt, dass eine Zufallsposition, bei der anfänglich die Zahnflanken von motorseitigem Zahnrad und getriebeseitigem Zahnrad genau aneinanderliegend ausgerichtet waren, diese nun derart versetzt sind, dass die Zahnräder ineinandergreifen können. Aber auch ein Verdrehen der Zahnräder, ohne dass die Winkellage, um die die Zahnräder relativ zueinander verdreht werden, kontrolliert wird, führt mit hoher Wahrscheinlichkeit dazu, dass eine neue Relativposition zwischen den beiden zugeordneten Zahnrädern eingenommen wird, in der motorseitiges Zahnrad und getriebeseitiges Zahnrad ineinandergreifen können.

In einer bevorzugten Weiterbildung des Verfahrens ist vorgesehen, dass vor dem Verdrehen von motorseitigem Zahnrad und getriebeseitigem Zahnrad ein geringfügiges Voneinanderwegbewegen von motorseitigem Zahnrad und getriebeseitigem Zahnrad erfolgt dergestalt, dass die Zahnflanken beim Verdrehen zwischen motorseitigem Zahnrad und getriebeseitigem Zahnrad nicht aneinanderreiben, um diese bei der Verdrehbewegung nicht zu beschädigen.

In einer konkreten Ausgestaltung des vorliegenden Verfahrens kann vorgesehen sein, dass die Verschiebung von motorseitigem Zahnrad und getriebeseitigem Zahnrad relativ zueinander in einer Achse parallel zur Achse der Zug- und/oder Druckstange erfolgt.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen
- Figur 1: eine Veranschaulichung einer Ausführungsform des steuerungstechnischen Aufbaus einer Spanneinrichtung nach der Erfindung.
- Figur 2: eine Ausführungsform einer Spanneinrichtung, bei der der steuerungstechnische Aufbau nach Figur 1 realisiert sein kann.
- Figur 3: eine Frontansicht der Ausführungsform nach Figur 2.
- Figur 4: eine Schnittansicht entlang der Linie IV-IV in Figur 3.
- Figur 5: eine Teilschnittansicht entlang der Linie V-V in Figur 3.
- Figuren 5a und 5b: Ausschnitte aus Figur 5 zur Erläuterung der Wirkungsweise des elektromechanischen Verstellantriebs.
- Figuren 6a und 6b: in Figur 4 angedeutete Ausschnittsvergrößerungen zur Erläuterung der Wirkungsweise der Kopplungseinrichtung.
- Figur 7: ein Diagramm zur Erläuterung der überlagerten Federcharakteristika, wenn im Federkraftspeicher eine Kombination von Gasdruckfedern und Spiralfedern eingesetzt wird.

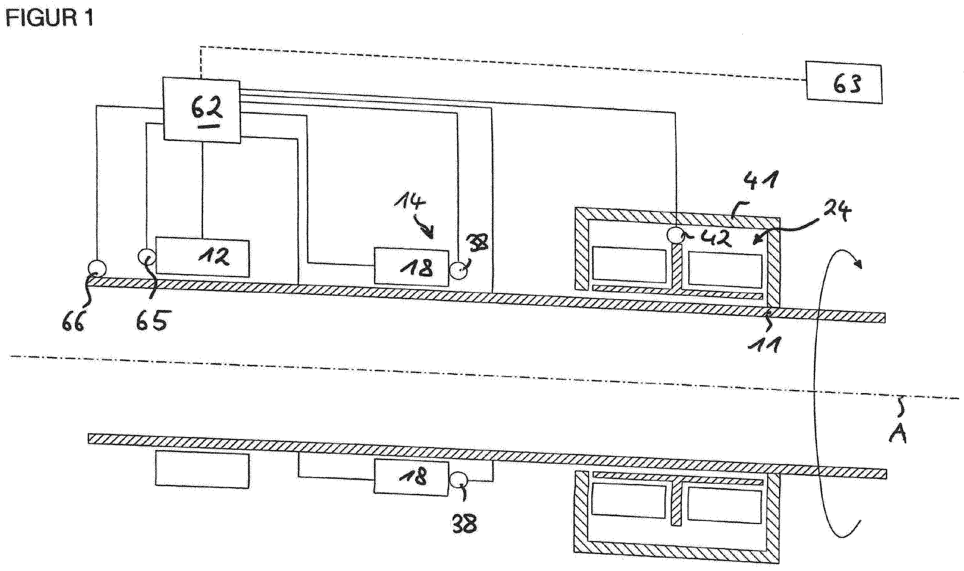

In Figur 1 ist eine Ausführungsform des steuerungstechnischen Aufbaus einer Spanneinrichtung nach der Erfindung veranschaulicht. Die Spanneinrichtung ist zur Veranschaulichung der Verfahren in Figur 1 zunächst nur ganz schematisch dargestellt und umfasst entlang der Achse A eine rohrförmig ausgebildete Zug- und/oder Druckstange 11, über die sich ein Kraftspannfutter (nicht gezeigt) einer Werkzeugmaschine (nicht gezeigt) betätigen lässt. An einem distalen Ende der mit der Werkzeugmaschine umlaufenden Zug- und/oder Druckstange 11 ist ein hier als Elektromotor 12 ausgebildeter Motor vorgesehen, der nicht mit der Zug- und/oder Druckstange umläuft. Zur Ermittlung der Umdrehungszahl des Motors 12 ist ein Sensor 65 vorgesehen. Anstelle ganzzahliger Umdrehungen kann der Sensor in einer alternativen Ausgestaltung auch Teilumdrehungen, insbesondere auch Veränderungen nur der Winkellage des Elektromotors erfassen. Werden komplette Umdrehungen erfasst, kann der Sensor 65 beispielsweise als Hallsensor ausgebildet sein.

Zur Ermittlung der Drehzahl der Zug- und/oder Druckstange 11 ist ein Sensor 66 vorgesehen.

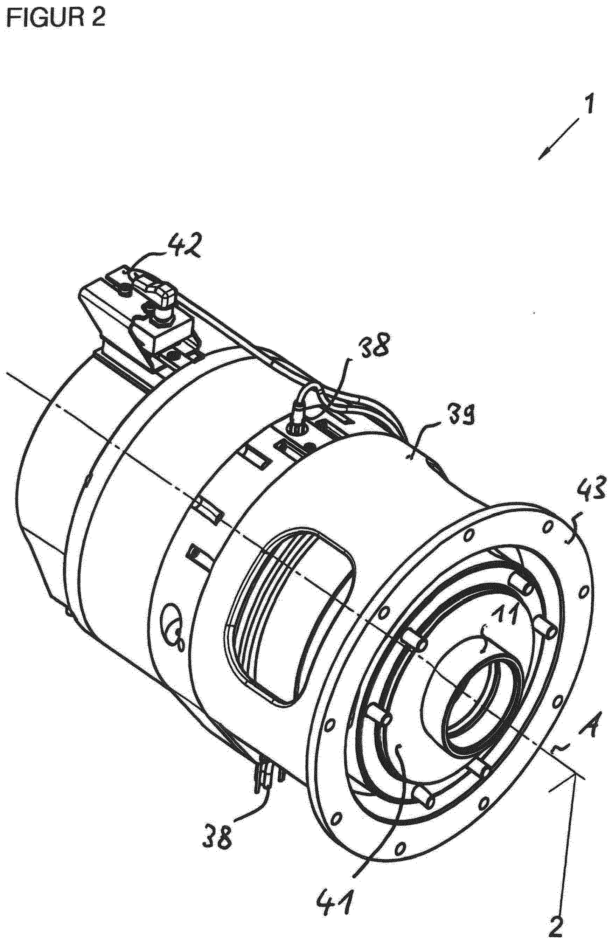

Um die vom Motor 12 erzeugbare Drehbewegung in einem Spannzylinder 41 über Getriebemittel 13 (vgl. Figuren 2 ff.) auf die Zug- und/oder Druckstange 11 zu übertragen, kann der Motor 12 über eine Kopplungseinrichtung 14 bedarfsweise drehmomentschlüssig mit den Getriebemitteln 13 (vgl. Figuren 2 ff.) gekoppelt werden.

Der Kopplungsvorgang wird durch eine Steuerungseinrichtung 62 gesteuert. Die Steuerungseinrichtung 62 kann dabei ganz oder teilweise innerhalb der Spanneinrichtung oder ganz oder teilweise außerhalb der Spanneinrichtung implementiert sein. Die Steuerungseinrichtung 62 für die Spanneinrichtung kann darüber hinaus auch mit einer Werkzeugmaschinensteuerung 63 zusammenarbeiten, insbesondere im Datenaustausch stehen.

Nachstehend soll ein Kopplungsvorgang zwischen dem hier als Elektromotor ausgewählten Motor 12 und dem im Spannzylinder 41 untergebrachten Getriebemitteln 13 näher erläutert werden. Unter einem Spannvorgang soll vorliegend sowohl das Einspannen eines Werkzeugs oder Werkstücks in ein Kraftspannfutter als auch der gegenteilige Vorgang, nämlich das Lösen eines Werkstücks oder Werkzeugs aus einem Kraftspannfutter sowie die Erhöhung bzw. Verringerung der in einem Federkraftspeicher 24 bereitgestellten Kraft verstanden werden.

Die bereits erwähnte Steuereinrichtung 62 steht dabei in Wirkverbindung mit Sensoreinrichtungen 38 an der Kopplungseinrichtung 14 sowie mit Sensoreinrichtungen 42, die einen Verfahrweg im Federkraftspeicher 24 erfassen. Über den erfassten Verfahrweg im Federkraftspeicher 24 lässt sich auf die dort jeweils gespeicherte Gegenkraft schließen, wie dies an sich bekannt ist.

Weiterhin steht die Steuerungseinrichtung 62 noch in Wirkverbindung mit den bereits erwähnten Sensoren 65, 66. Es versteht sich von selbst, dass die von der Steuerungseinrichtung 62 über die Sensoreinrichtungen 38, 42 bzw. Sensoren 65, 66 erfassten Daten zumindest teilweise auch von einer externen Steuerung, beispielsweise der bereits erwähnten Werkzeugmaschinensteuerung 63 bereitgestellt werden können. Eine derartige Werkzeugmaschinensteuerung 63 verfügt normalerweise über ausreichende Informationen, was die Drehgeschwindigkeit eines Werkzeugs oder Werkstücks anbelangt, die insofern der Drehgeschwindigkeit N_{Z} der Zug- und/oder Druckstange 11 entspricht. Die Werkzeugmaschinensteuerung 63 kann aber nicht nur an der Bereitstellung von Daten mitwirken, sondern auch hinsichtlich der eigentlichen Ansteuerung des Motors 12 und/oder hinsichtlich der Ansteuerung der Kopplungseinrichtung 14 mit der Steuerungseinrichtung 62 zusammenwirken, insbesondere in der Ausgestaltung einer übergeordneten Steuerung.

Soll ein Spannvorgang vorgenommen werden, so wird ein motorseitiges Zahnrad 27 in Richtung auf ein getriebeseitiges Zahnrad 28 (vgl. Figuren 2 ff.) verfahren, wobei die bereits erwähnten Sensoreinrichtungen 38 die jeweilige Verschiebeposition des motorseitiges Zahnrads 27 p₁(t), wenigstens aber die erreichte Koppelstellung erfassen. Es können nunmehr zwei Fälle auftreten: Entweder die Zahnräder 27 und 28 sind bereits so zueinander ausgerichtet, dass sie bei ihrer Annäherung komplett ineinandergreifen. In diesem Fall detektieren die Sensoreinrichtungen 38, dass das motorseitiges Zahnrad 27 über die gesamte Verschiebestrecke S verfahren wurde und insofern eine Kopplung zwischen Motor 12 und den im Spannzylinder 41 angeordneten Getriebemitteln 13 vorliegt (Koppelstellung). Sofern aber die Sensoreinrichtungen 38 detektieren, dass das motorseitige Zahnrad 27 nicht komplett verfahren werden konnte, da die Zähne der Zahnräder 27, 28 unmittelbar aufeinanderstehen, so veranlasst die Steuereinrichtung 62 das ggf. unter geringfügigem Voneinanderwegbewegen von motorseitigem Zahnrad 27 und getriebeseitigem Zahnrad 28 der Motor 12 kurz angesteuert wird, um ein Verdrehen des motorseitigen Zahnrads 27 zu bewirken. Anschließend wird der Vorgang des Annäherns erneut durchgeführt und vermittels der Sensoreinrichtungen 38 überprüft, ob das motorseitige Zahnrad 27 nunmehr in seine Endstellung (Koppelstellung) gelangt ist, also ein Eingriff zwischen dem Zahnrad 27 und dem Zahnrad 28 realisiert ist. Anschließend wird der Motor 12 mit der jeweils benötigten Drehrichtung betätigt, um durch axiale Verschiebung der Zug- und/oder Druckstange 11 ein Werkzeug oder ein Werkstück aus dem Kraftspannfutter zu lösen bzw. im Kraftspannfutter einzuspannen.

Es versteht sich von selbst, dass sich über eine derartige Betätigung des Motors 12 im eingekoppelten Zustand auch eine Veränderung der im Federkraftspeicher 24 erzeugten Gegenkraft erreicht werden kann, etwa zur Erhöhung der bereitgestellten Gegenkraft parallel zueinander angeordnete Spiralfedern 25 und Gasdruckfedern 26 weiter komprimiert werden können bzw. zur Verringerung der bereitgehaltenen Gegenkraft die parallel angeordneten Spiralfedern 25 und Gasdruckfedern 26 auch entlastet werden können.

Durch das erfindungsgemäße Verfahren bzw. die erfindungsgemäße Steuereinheit 62 ist es auch möglich, derartige Erhöhungen oder Reduzierungen der im Federkraftspeicher 24 vorgehaltenen Gegenkraft während des Betriebs der Werkzeugmaschine, d.h. bei umlaufender Zug- und/oder Druckstange 11 vorzunehmen. In diesem Fall wird der Motor im ausgekoppelten Zustand - das motorseitige Zahnrad 27 befindet sich in einer mit dem getriebeseitigen Zahnrad 28 außer Eingriff gebrachten Position (Ruhestellung) - durch die Steuerungseinrichtung auf eine Umdrehungszahl N_{M} gebracht, die der Umdrehungszahl N_{Z} der Zug- und/oder Druckstange 11 entspricht (N_{M}=N_{Z}). Hierfür erfassen die Sensoren 66 die Umdrehungszahl der Zug- und/oder Druckstange 11. Die Steuerungseinrichtung steuert den Motor 12, der bevorzugterweise als Elektromotor ausgebildet ist, nun so an, dass dieser mit der gleichen Umdrehungszahl wie die Zug- und/oder Druckstange 11 umläuft, ggf. wird die tatsächliche Umdrehungszahl des Elektromotors noch durch den bereits angesprochenen Sensor 65 überwacht. Stimmen Umdrehungszahlen der Zug- und/oder Druckstange 11 mit den Umdrehungszahlen des Motors 12 überein (N_{Z}=N_{M}), kann der eigentliche Kopplungsvorgang durchgeführt werden: Es wird dann das motorseitige Zahnrad 27 in Richtung auf das getriebeseitige Zahnrad 28 verschoben. Dabei wird die Verschiebebewegung, wenigstens aber eine ggf. durch das motorseitige Zahnrad 27 erreichte Endposition (Koppelstellung) durch die Sensoreinrichtungen 38 überwacht.

Stellen die Sensoreinrichtungen 38 fest, dass das motorseitige Zahnrad 27 in die vorgesehene Koppelstellung gelangt ist, so wird unter vorbestimmter Erhöhung bzw. vorbestimmter Verringerung der Drehzahl des Motors gegenüber der Drehzahl N_{Z} der Zug- und/oder Druckstange 11 eine Erhöhung bzw. Verringerung der vom Federkraftspeicher 24 bereitgestellten Gegenkraft vorgenommen. Hierbei kann aus Bildung der Differenz der Umdrehungszahlen von Zug- und/oder Druckstange 11 und Motor 12 auf den Verschiebeweg im Federkraftspeicher 24 geschlossen werden. Alternativ, bevorzugtermaßen zusätzlich, wird auch der Verschiebeweg im Federkraftspeicher 24 unmittelbar durch die bereits erwähnte Sensoreinrichtung 42 erfasst.

Sobald eine gewünschte neue Gegenkraft eingestellt ist, wird das motorseitige Zahnrad 27 in die Ruhestellung zurückgefahren mit der Folge, dass ein neues Gleichgewicht zwischen der auf die Zug- und/oder Druckstange 11 wirkenden Kraft und der vom Federkraftspeicher 24 erzeugten Gegenkraft eingestellt ist.

Es versteht sich von selbst, dass dieser Vorgang beliebig oft, sobald der Bedarf hierfür besteht, wiederholt werden kann. Mit dem vorgeschlagenen, vorzugsweise rein elektromotorisch ausgeführten Verfahren zur Durchführung eines Kopplungsvorgangs werden rasche und zuverlässige Spannvorgänge ermöglicht.

Gleichzeitig können Korrekturen der vom Federkraftspeicher bereitgestellten Gegenkraft auch während des Betriebs der Werkzeugmaschine vorgenommen werden.

Unter Bezugnahme auf Figur 2 ist eine konkrete Ausführungsform einer Spanneinrichtung in perspektivischer Ansicht von außen dargestellt, bei der die erfindungsgemäßen Steuerungsverfahren implementiert sein können.

Innerhalb eines Außengehäuses von zylindrischer Grundform 39 ist koaxial der im Betrieb der Werkzeugmaschine mit umlaufender Spannzylinder 41 angeordnet, der eine zentrale Achse A definiert. Im Spannzylinder 41 aufgenommen ist die axial verschiebbare Zug- und/oder Druckstange 11, über die ein Kraftspannfutter (nicht gezeigt) betätigt werden kann, wie an sich bekannt. Über das Außengehäuse 39 vorstehend sind noch die Sensoreinrichtungen 38, 42 erkennbar, die Verstellwege erfassen, wie bereits erläutert. An der dem Spannfutter (nicht gezeigt) zugewandten Ende weist die Spanneinrichtung einen Flansch 43 zum Anschluss an die zugeordnete Werkzeugmaschine (nicht gezeigt) auf.

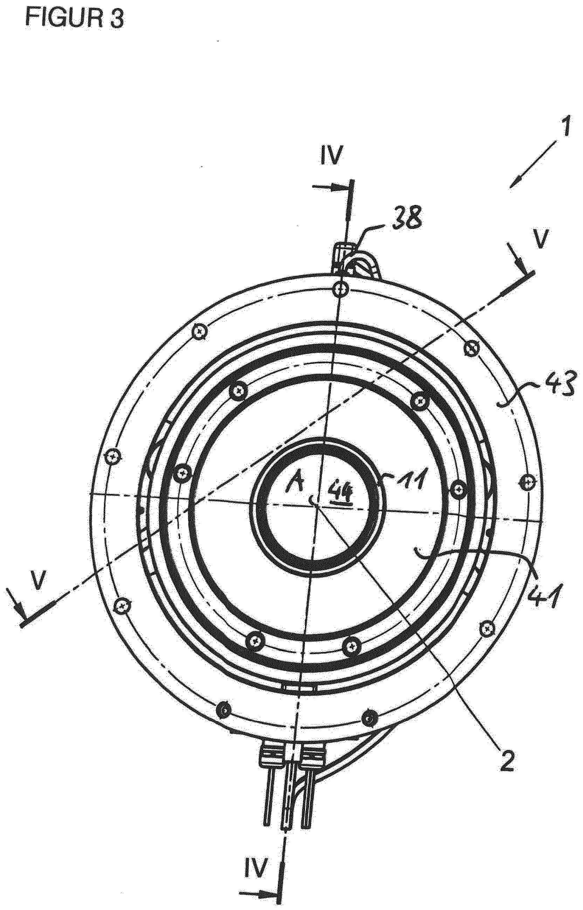

In Figur 3 ist die Spanneinrichtung nach Figur 2 in Frontansicht dargestellt. Zu erkennen ist, dass die Zug- und/oder Druckstange 11 rohrförmig ausgestaltet ist und einen lichten Innenquerschnitt 44 definiert, der das Eintauchen eines Werkstücks ermöglicht.

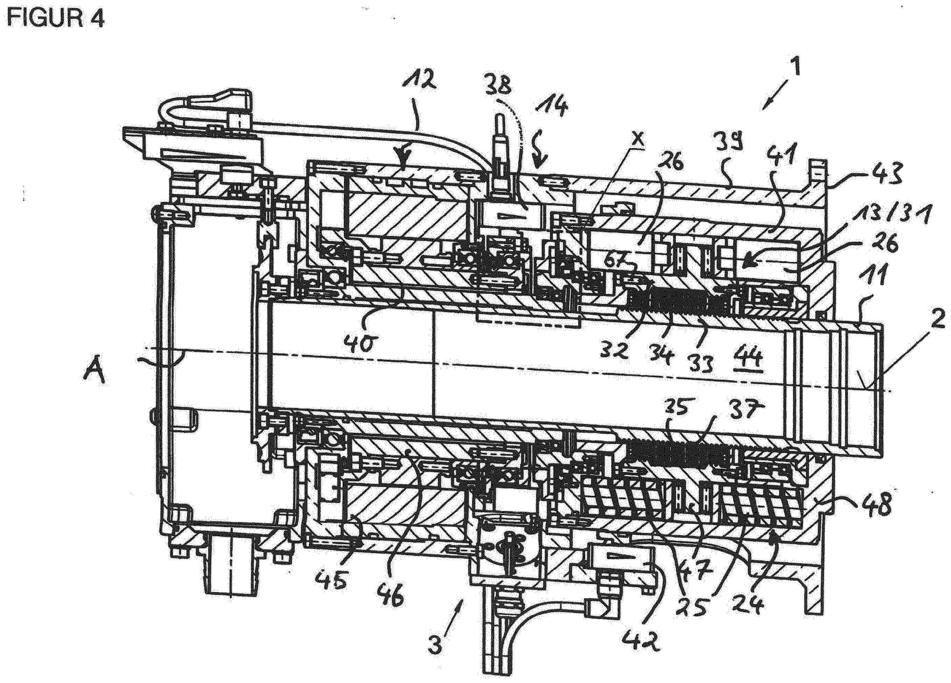

In Figur 4 ist eine Schnittansicht durch die Ausführungsform der Spanneinrichtung nach den Figuren 2 und 3 veranschaulicht. Entlang der zentralen Achse ist die rohrförmig ausgestaltete Zug- und/oder Druckstange 11, die einen lichten Innenquerschnitt 44 aufweist, gelagert. Die Spanneinrichtung 44 ist bzw. lässt sich baulich axial entlang der Achse A in drei nebeneinander angeordnete Teilelemente untergliedern. Am distalen, einem Kraftspannfutter (nicht gezeigt) abgewandten Ende der Zug- und/oder Druckstange 11 ist koaxial zur Zug- und/oder Druckstange der als Elektromotor ausgebildete Motor 12 angeordnet. An der dem Kraftspannfutter (nicht gezeigt) zugewandten Seite des Motors 12 ist die Kopplungseinrichtung 14 vorgesehen. An die Kopplungseinrichtung 14 schließt sich dann der Spannzylinder 41 an, der die Getriebemittel 13 umfasst, um die vom Motor 12 erzeugte Drehbewegung in eine Axialbewegung der Zug- und/oder Druckstange 11 umzusetzen. Im axialen Bereich weist der Motor 12 eine parallel zur Achse A verlaufende Ausnehmung 40 auf. Die Zug- und/oder Druckstange durchdringt diese Ausnehmung 40 bei der vorliegenden Ausführungsform.

Der Motor 12 weist einen Stator 45 sowie einen Rotor 46 auf, die beide koaxial um die Achse A bzw. die Zug- und/oder Druckstange 11 angeordnet sind. Bei dem Motor handelt es sich vorzugsweise um einen Elektromotor mit einstellbarer Drehzahl, insbesondere um einen mit gesteuerter bzw. geregelter Drehzahl, weiter insbesondere um einen Torquemotor.

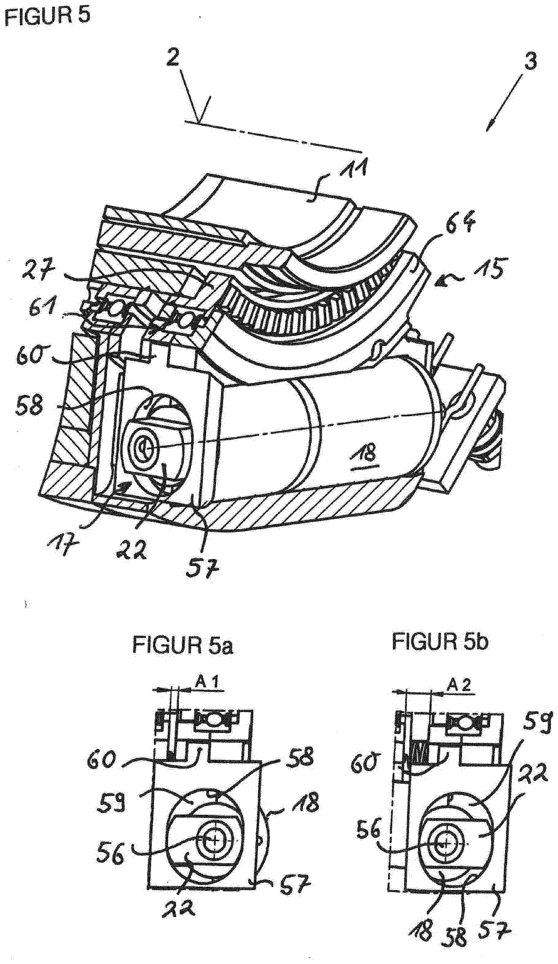

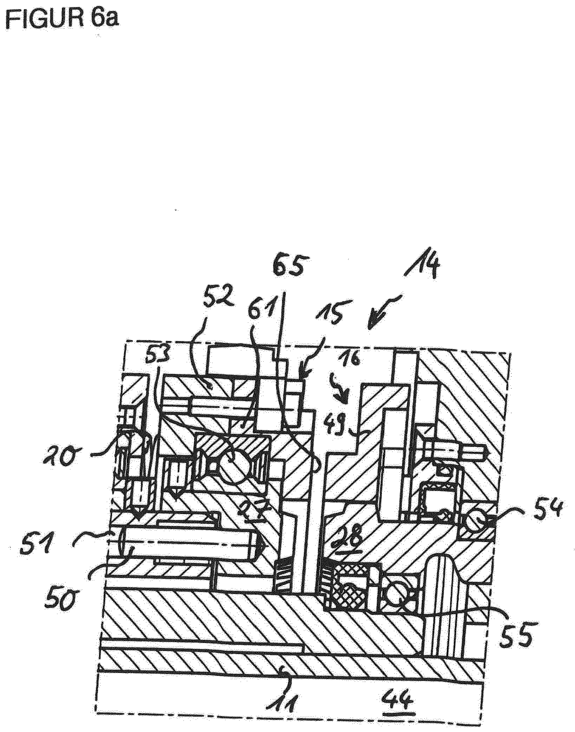

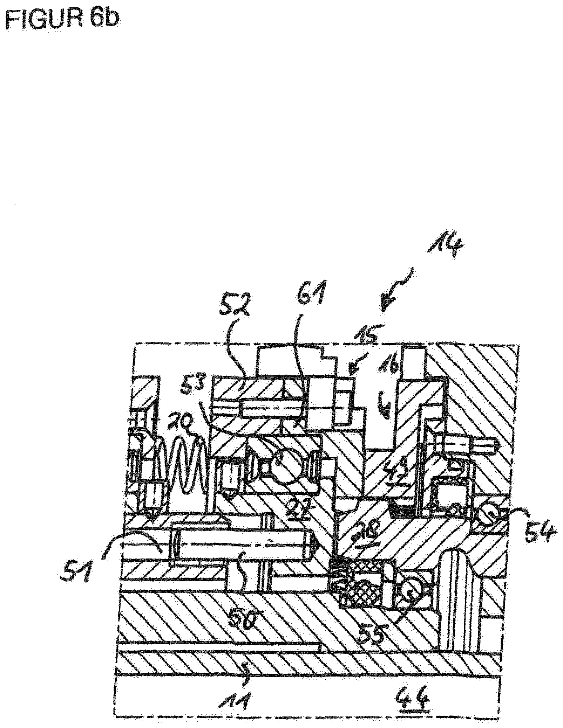

Über die bereits erwähnte, unter Bezugnahme auf die Figuren 5, 5a, 5b, 6a und 6b noch detaillierter erläuterte Kopplungseinrichtung 14 wird eine vom Elektromotor 12 erzeugte Drehbewegung im Bedarfsfall auf den Spannzylinder 41 übertragen, indem die Drehbewegung über Getriebemittel 13 in eine axiale Verstellung der Zug- und/oder Druckstange umgewandelt bzw. in eine Verfahrung eines Anschlags 47 innerhalb eines im Spannzylinder 41 untergebrachten Federkraftspeichers 24 umgewandelt wird. Die Getriebemittel 13 im Spannzylinder 41 umfassen bei der vorliegenden Ausführungsform einem Planetenrollengewindetrieb 31. Dieser Planetenrollengewindetrieb umfasst einen innenliegenden Außengewindekörper 33, der hier integral mit der Zug- und/oder Druckstange 11 ausgebildet ist und einen axial hierzu beweglichen außenliegenden Innengewindekörper 32, der drehmomentschlüssig mit einer im Zahnrad 28, das ein getriebeseitiges Teilelement 16 der Kopplungseinrichtung 14 bildet, verbunden ist.

Zwischen dem außenliegenden Innengewindekörper 32 und dem innenliegenden Außengewindekörper 33 sind mehrere Rollkörper 34, 35 angeordnet, die mit einem zum Innengewindekörper 32 bzw. Außengewindekörper 33 passenden Gewinde versehen sind. Wird somit der außenliegende Innengewindekörper 32 relativ zur Zug- und/oder Druckstange 11 verdreht, wird hierdurch eine axiale Verschiebung zwischen außenliegendem Innengewindekörper 32 und innenliegendem Außengewindekörper 33 also der Zug- und/oder der Druckstange erzeugt. Ist eine axiale Verschiebung der Zug- und/oder Druckstange gegenüber dem Flansch 43 der Spanneinrichtung nicht mehr möglich, weil ein Werkstück bereits fest im Kraftspannfutter gespannt ist, findet dennoch bei weiterer Rotation von (außenliegendem) Innengewindekörper 32 zu (innenliegendem) Außengewindekörper 33 eine axiale Verschiebung zwischen beiden statt. Allerdings bleibt dann die Zug- und/oder Druckstange 11 relativ zum Flansch 43 auf gleicher Axialposition und der (außenliegende) Innengewindekörper 32 bewegt sich mit seinem Anschlag 47 in einer zur Achse A parallelen Richtung in Richtung auf den Flansch 43 bzw. vom Flansch 43 weg.

Der bereits erwähnte Federkraftspeicher 24 weist eine Mehrzahl von bereits erwähnten, sich an einem Innengehäuse 48 des Spannzylinders 41 abstützenden Spiralfedern 25 und Gasdruckfedern 26 auf, wobei die Spiralfedern 25 und die Gasdruckfedern 26 jeweils mit einem ersten Ende einander zugewandt sind, aber der bereits erwähnte Anschlag 47 zwischen diesen beiden ersten Enden angeordnet ist. Mit den distalen zweiten Enden stützen sich die Spiralfedern 25 und Gasdruckfedern 26 jeweils am Innengehäuse 48 ab, derart, dass der Anschlag 47 nur gegen Aufbietung einer entsprechenden Kraft aus einer neutralen Grundstellung in die eine oder andere Richtung, jeweils unter Kompression der dann zugeordneten Spiralfeder 25 bzw. Gasdruckfeder 26 verschiebbar ist.

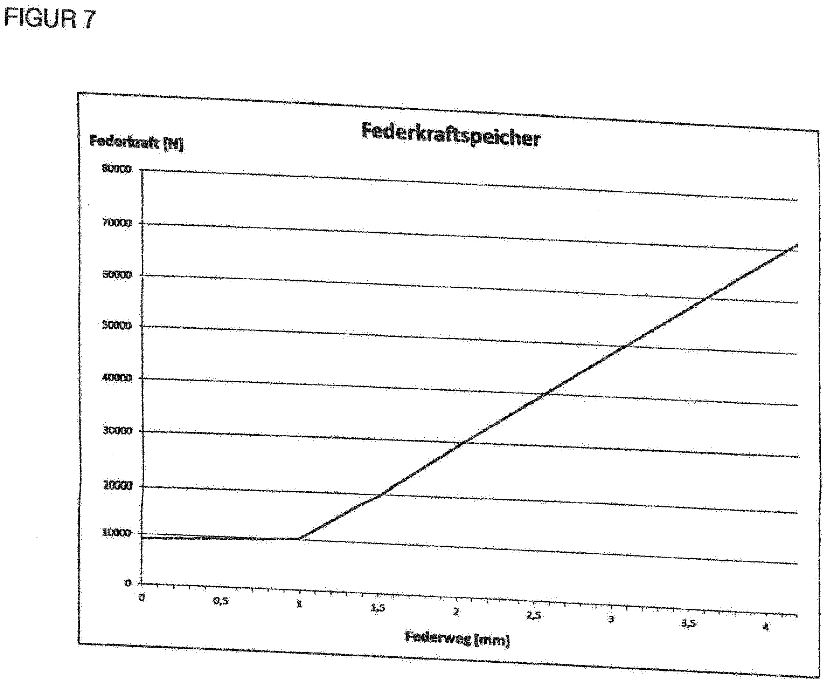

Da erfindungsgemäß die Spiralfedern 25 und Gasdruckfedern 26 parallel wirksam sind, überlagern sich die Charakteristika beider Federelemente unterschiedlicher Bauart. Ein Beispiel einer resultierenden Federcharakteristik ist in Figur 7 dargestellt. Während bekanntermaßen Spiralfedern eine annähernd lineare Federcharakteristik aufweisen, also bei anfänglicher Kompression die dadurch erzeugte Gegenkraft relativ gering ist, definieren Gasdruckfedern schon bei nur geringfügiger Kompression eine vergleichsweise hohe Gegenkraft. Überlagert man nun beide Federcharakteristika, so lässt sich eine schon bei geringfügigen Verstellwegen hohe Gegenkraft gewährleisten, wobei gleichzeitig bei größeren Verschiebewegen die Eigenschaft der Spiralfedern zum Tragen kommt, dass nämlich die Rückstellkraft linear ansteigt, also ein noch weiterer Verschiebeweg eine noch höhere Rückstellkraft erzeugt, so dass trotz der geringen zur Verfügung stehenden Verschiebewege ausreichende Gegenkräfte erzeugt werden können.

Nachstehend wird nun unter Bezugnahme auf die Figuren 5, 5a, 5b, 6a und 6b die Kopplungseinrichtung 14 zwischen Motor 12 und Getriebemittel 13 näher erläutert. Die Kopplungseinrichtung 11 weist dabei ein motorseitiges Teilelement 15 sowie ein getriebeseitiges Teilelement 16 auf. Bei der vorliegenden Ausführungsform ist das motorseitige Teilelement 15 axial verschieblich angeordnet, wohingegen das getriebeseitige Teilelement 16 bis auf ein verschiebliches Riegelelement 49 axial feststehend ausgebildet ist. Es sei aber bereits an dieser Stelle erwähnt, dass eine Kopplungseinrichtung 14 auch in der Weise denkbar ist, dass das motorseitige Teilelement 15 axial feststehend ausgebildet und angeordnet ist und sich das getriebeseitige Teilelement 16 verschieben lässt.

In der vorliegenden Ausgestaltung ist das motorseitige Teilelement 15 über Führungszapfen 50, die in entsprechende Führungsausnehmungen im Rotor 46 des Elektromotors 12 in den Rotor 46 eingreifen, gelagert. Das motorseitige Teilelement 15 umfasst bei der vorliegenden Ausführungsform ein Außenelement 52 sowie ein gegenüber dem Außenelement über ein Lager 53 drehbar gelagertes Zahnrad 27. Die bereits erwähnten Führungszapfen 50 greifen dabei in das drehbar gelagerte Zahnrad 27 ein und dienen insofern nicht nur als axiale Führung, sondern auch dazu, die Drehbewegung des Rotors 46 auf das im motorseitigen Teilelement drehbar gelagerte Zahnrad 27 zu übertragen.

Das getriebeseitige Teilelement 16 weist zunächst ein axial feststehendes, allerdings über Lager 54, 55 drehbar gelagertes Zahnrad 28 auf. Das Zahnrad 28 ist drehmomentschlüssig mit dem bereits erwähnten Innengewindekörper 32 verbunden, der über axial ausgerichtete Führungen 67 relativ zum Zahnrad 28 axial verschieblich gehalten ist.

Das getriebeseitige Teilelement 16 weist weiterhin ein Riegelelement 49 auf, das über eine Anschlagfläche 64 am motorseitigen Teilelement 15 in Richtung auf den Flansch 43 verschoben werden kann, um das Innengehäuse 48 drehmomentschlüssig mit dem Zahnrad 28 und insofern mit dem außenliegenden Innengewindekörper 32 zu verbinden. In einer entgegengesetzten Position, relativ zum Flansch 43 distalen Position ist hingegen Zahnrad 28 über das Lager 54 frei gegenüber dem Innengehäuse 48 beweglich, so dass ein Kräftegleichgewicht gehalten werden kann zwischen der vom Kraftspannfutter auf die Zug- und/oder Druckstange übertragenen Axialkraft und der vom Federkraftspeicher 24 bereitgestellten Gegenkraft.

Nachstehend wird unter Bezugnahme auf die Figuren 5, 5a und 5b ein elektromechanischer Verstellantrieb 17 der Koppellungseinrichtung 14 erläutert, der eine Verschiebebewegung des motorseitigen Teilelements 15 bewirkt.

In der konkreten Ausgestaltung umfasst der elektromechanische Verstellantrieb 17 zwei Elektromotoren mit jeweils einer austretenden Welle 56, wobei vorliegend nur ein Elektromotor 18 dargestellt ist. Auf der Welle 56 ist jeweils drehmomentschlüssig ein Exzenter 22 befestigt, der in eine Öffnung 59 einer Platte 57 eingreift, wobei die Öffnung 59 ein entsprechende Exzenterkurve 58 definiert. Die Elektromotoren 18 sind relativ zum Außengehäuse 39 feststehend angeordnet, wohingegen die Platten 57 Bestandteil des bereits erwähnten Außenelements 52 des verschieblich gelagerten motorseitigen Teilelements 15 sind. Selbstverständlich wäre es in einer kinematischen Umkehr auch denkbar, die Elektromotoren am verschieblich gelagerten motorseitigen Teilelement 15 anzuordnen und die Platten 57 mit Exzenterkurve 58 feststehend zum Außengehäuse 39 vorzusehen. Es wird allerdings die erstgenannte Variante, bei der die Elektromotoren 18 feststehend und die Platten 57 verschieblich angeordnet sind, bevorzugt. Die Öffnungen 59 in der Platte 57 definieren eine derartige Exzenterkurve, dass die Platten 57 relativ zum Außengehäuse 39 über den erforderlichen Verschiebeweg verschiebbar sind, um Zahnrad 27 und Zahnrad 28 miteinander in Eingriff bzw. außer Eingriff zu bringen. Die Platten 57 können einstückiger Bestandteil des bereits erwähnten Außenelements 52 sein. Sofern das Außenelement 52 mehrstückig, umfassend mindestens die Platte 57 sowie ein ggf. mehrteiliges Ringelement 61, aufgebaut ist, sind die Platten 57 in geeigneter Weise mit dem Ringelement 61 verbunden, beispielsweise dadurch, dass ein Mitnahmeabschnitt 60 in das Ringelement 61 eingreift.

Um das motorseitige Teilelement 15 in einer zum Motor 12 hingezogenen Ruhestellung zu halten, können mehrere Maßnahmen alternativ oder kumulativ vorgesehen werden: Zunächst können entsprechende Zugfedern 20 vorgesehen sein, die ohne Betätigung der Elektromotoren 18 das motorseitige Teilelement 15 in der an den Motor 12 angenäherten Ruhestellung halten. Alternativ oder zusätzlich kann die Exzenterkurve 58 bzw. die Ansteuerung der Elektromotoren 18 so getroffen sein, dass der Exzenter 22 in der Stellung, in der das motorseitige Teilelement 15 in der an den Motor 12 angenäherten Stellung (Ruhestellung) gehalten wird, eine Übertotposition einnimmt, so dass bei stromlosen Elektromotoren diese Position definiert beibehalten wird. Nur wenn die Elektromotoren entsprechend angesteuert werden, werden dann die Platten 57 in gewünschter Weise in Richtung auf den Flansch 43 verschoben, so dass das gesamte motorseitige Teilelement 15 vom Motor 12 weg in Richtung auf die Getriebemittel 13 verschoben wird.

Um den Verschiebevorgang des motorseitigen Teilelements 15 zu überwachen, sind zweckmäßigerweise Sensoreinrichtungen 38 vorgesehen, die die jeweilige Position des motorseitigen Teilelements 15 erfassen, und zwar vorzugsweise nicht nur die jeweiligen Endlagen, sondern diskret oder kontinuierlich auch vom motorseitigen Teilelement 15 eingenommene Zwischenpositionen p₁(t).

### Bezugszeichenliste

- 11: Zug- und/oder Druckstange
- 12: Motor
- 13: Getriebemittel
- 14: Kopplungseinrichtung
- 15: Motorseitiges Teilelement
- 16: Getriebeseitiges Teilelement
- 17: Elektromechanischer Verstellantrieb
- 18: Aktuatoren, Elektromotoren
- 20: Zugfedern
- 22: Exzenter
- 24: Federkraftspeicher
- 25: Spiralfedern
- 26: Gasdruckfedern
- 27, 28: Zahnräder
- 31: Planetenrollengewindetrieb
- 32: (außenliegender) Innengewindekörper
- 33: (innenliegender) Außengewindekörper
- 34, 35: Rollkörper
- 37: Außengewinde (Rollkörper)
- 38: Sensoreinrichtungen
- 39: Außengehäuse
- 40: axiale Ausnehmung
- 41: Spannzylinder
- 42: Sensoreinrichtung
- 43: Flansch
- 44: (lichter) Innenquerschnitt
- 45: Stator
- 46: Rotor
- 47: Anschlag
- 48: Innengehäuse (Spannzylinder)
- 49: Riegelelement
- 50: Führungszapfen
- 51: Führungsausnehmungen
- 52: Außenelement
- 53: Lager
- 54: Lager
- 55: Lager
- 56: Welle (Elektromotor)
- 57: Platte
- 58: Exzenterkurve
- 59: Öffnungen
- 60: Mitnahmeabschnitt
- 61: Ringelement
- 62: Steuerungseinrichtung
- 63: Werkzeugmaschinensteuerung
- 64: Anschlagfläche
- 65: Sensor (Umdrehung Elektromotor)
- 66: Sensor (Umdrehung Zug- und/oder Druckstange)
- 67: Führungen (Innengewindekörper)

## Patentansprüche

1. Verfahren zur Durchführung eines Kopplungsvorgangs zwischen einem Motor (12) und auf eine Zug- und/oder Druckstange (11) einwirkenden Getriebemitteln (13) in einer Spanneinrichtung für eine Werkzeugmaschine, wobei die Zug- und/oder Druckstange (11) im Betrieb der Spanneinrichtung mitumläuft und Spannvorgänge durch axiale Verschiebung der Zug- und/oder Druckstange bewirkt werden, indem eine durch einen Motor (12) erzeugte Drehbewegung über die Getriebemittel (13), beispielsweise über einen Spindeltrieb oder einen Planetenrollengewindetrieb (31), an der Zug- und/oder Druckstange in eine axiale Verschiebung und/oder axiale Kraft übersetzt werden,
wobei die Kopplungseinrichtung (14) ein motorseitiges Zahnrad (27) sowie ein getriebeseitiges Zahnrad (28) umfasst, die über eine vorgegebene Verschiebestrecke S verfahrbar und somit in Eingriff (Koppelstellung) bzw. außer Eingriff (Ruhestellung) bringbar sind,
wobei ein Annäherungsprozess von motorseitigem Zahnrad (27) und getriebeseitigem Zahnrad (28) durchgeführt wird, um diese in Eingriff bzw. in Koppelstellung zu bringen,
**dadurch gekennzeichnet, dass**
in dem Annäherungsprozess in einem Überwachungsschritt überwacht wird, ob motorseitiges Zahnrad (27) und getriebeseitiges Zahnrad (28) in Eingriff gekommen sind und
in Abhängigkeit des Ergebnisses des Überwachungsschritts ggf. in einem Lagekorrekturschritt eine Lagekorrektur vorgenommen wird.

2. Verfahren nach Anspruch 1, **dadurch gekennzeichnet, dass** im Betrieb der Werkzeugmaschine der Motor (12) im Gegensatz zur Zug- und/oder Druckstange (11) nicht mitumläuft.

3. Verfahren nach Anspruch 1, **dadurch gekennzeichnet,**
**dass** zur Durchführung eines Koppelvorgangs der im Betrieb der Werkzeugmaschine mit vorgegebener Drehzahl N_{Z} mitumlaufenden Zug- und/oder Druckstange (11) mit einem nicht mit der Zug- und/oder Druckstange (11) umlaufenden Motor (12) ein Synchronisationsprozess durchgeführt wird, wobei der Synchronisationsprozess
- das Erfassen der Drehzahl N_{Z} der Zug- und/oder Druckstange (11),
- das Ansteuern und ggf. Überwachen des Motors (12), dass dieser mit einer N_{Z} entsprechenden Drehzahl N_{M} umläuft und
- das Annähern und Koppeln des motorseitigen Zahnrads (27) und des getriebeseitigen Zahnrads (28), wenn N_{Z} = N_{M} sichergestellt ist,
umfasst.

4. Verfahren nach Anspruch 3, **dadurch gekennzeichnet, dass** nach dem Ineingriffbringen von motorseitigem Zahnrad (27) und getriebeseitigem Zahnrad (28) der Motor (12) derart angesteuert wird, dass er mit einer gegenüber der Drehzahl N_{Z} der Zug- und/oder Druckstange (11) geringfügig erhöhten Drehzahl N_{M} ↗ bzw. einer geringfügig reduzierten Drehzahl N_{M} ↘ betrieben wird.

5. Verfahren nach einem der Ansprüche 1 bis 4, **dadurch gekennzeichnet, dass** der Motor (12) zur Durchführung einer Spannkraftveränderung
- über eine vorgegebene Zeitspanne und/oder
- über eine vorgegebene Umdrehungszahl ΔN_{M} und/oder
- bis eine gewünschte neue Soll-Federkraft F_{Soll} beispielsweise über Sensoreinrichtungen (38) detektiert wird,
betrieben wird.

6. Verfahren nach einem der Ansprüche 1 bis 5, **dadurch gekennzeichnet, dass** die Kopplungseinrichtung elektromotorische Aktuatoren (18) umfasst, die zur Durchführung des Kopplungsvorgangs elektrisch angesteuert werden.

7. Verfahren nach einem der Ansprüche 1 bis 6, **dadurch gekennzeichnet, dass** der Motor (12) als Elektromotor ausgebildet ist und zur Durchführung des Kopplungsvorgangs elektrisch angesteuert wird.

8. Verfahren nach einem der Ansprüche 1 bis 7, **dadurch gekennzeichnet, dass** erfasst wird, ob das oder die verschiebbaren Zahnräder (27, 28) eine Endstellung eingenommen haben.

9. Verfahren nach einem der Ansprüche 1 bis 8, **dadurch gekennzeichnet, dass** die jeweils aktuelle Position p₁(t), p₂(t) des oder der Zahnräder (27, 28) erfasst wird.

10. Verfahren nach einem der Ansprüche 1 bis 9, **dadurch gekennzeichnet, dass** die aktuelle Drehzahl N_{Z} der Zug- und/oder Druckstange (11) mittels an oder in der Spanneinrichtung angeordneter Sensoren (66) erfasst oder von der Werkzeugmaschine übermittelt wird.

11. Verfahren nach einem der Ansprüche 1 bis 10, **dadurch gekennzeichnet, dass** die aktuelle Drehzahl N_{M} des Motors mittels an oder in der Spanneinrichtung angeordneter Sensoren (65) erfasst oder direkt von der Motorsteuerung übermittelt wird.

12. Verfahren nach einem der Ansprüche 1 bis 11, **dadurch gekennzeichnet, dass** der Lagekorrekturschritt ein Verdrehen des motorseitigen Zahnrads (27) relativ zum getriebeseitigen Zahnrad (28) umfasst und diese anschließend erneut aufeinander zubewegt werden, um sie in Koppelstellung zu bringen.

13. Verfahren nach Anspruch 12, **dadurch gekennzeichnet, dass** der Lagekorrekturschritt vor dem Verdrehen vom motorseitigen Zahnrad (27) und getriebeseitigen Zahnrad (28) ein geringfügiges Voneinanderwegbewegen von motorseitigem Zahnrad (27) und getriebeseitigem Zahnrad (28) umfasst, um die Zahnflanken beim Verdrehen zwischen motorseitigem Zahnrad (27) und getriebeseitigem Zahnrad (28) nicht zu beschädigen.

14. Verfahren nach einem der Ansprüche 1 bis 13, **dadurch gekennzeichnet, dass** die Verschiebung von motorseitigem Zahnrad (27) und getriebeseitigem Zahnrad (28) relativ zueinander in einer Achse parallel zur Achse der Zug- und/oder Druckstange (11) erfolgt.

## Claims

1. Method for performing a coupling process between a motor (12) and gear means (13) acting on a pull and/or push rod (11) in a clamping device for a machine tool, wherein the pull and/or push rod (11) co-rotates during operation of the clamping device and clamping operations are effected by axial displacement of the pull and/or push rod in that a rotary movement produced by a motor (12) is converted via the gear means (13), for example via a spindle drive or a planetary roller screw drive (31), on the pull and/or push rod into an axial displacement and/or axial force, wherein the coupling device (14) comprises a motor-side gearwheel (27) and a gear-side gearwheel (28) which can be moved over a predetermined displacement distance S and can thus be brought into engagement (coupling position) or out of engagement (rest position), wherein an approach process is carried out by the motor-side gearwheel (27) and the gear-side gearwheel (28) in order to bring them into engagement or into coupling position,
**characterized in that**, in the approach process, it is monitored in a monitoring step whether the motor-side gearwheel (27) and the gear-side gearwheel (28) have come into engagement and, depending on the result of the monitoring step, a position correction is optionally carried out in a position correction step.

2. Method according to claim 1, **characterized in that**, in contrast to the pull and/or push rod (11), the motor (12) does not co-rotate during operation of the machine tool.

3. Method according to claim 1, **characterized in that**, in order to carry out a coupling process, the pull and/or push rod (11) which co-rotates during operation of the machine tool at a predetermined rotational speed N_{z} is subjected to a synchronization process with a motor (12) which does not rotate with the pull and/or push rod (11), wherein the synchronization process comprises
- the detection of the speed N_{z} of the pull and/or push rod (11),
- the actuation and, optionally, monitoring of the motor (12) so that it rotates at a speed N_{M} corresponding to the respective speed N_{z}, and
- the approaching and coupling of the motor-side gearwheel (27) and the gear-side gearwheel (28) when N_{z}=N_{M} is ensured.

4. Method according to claim 3, **characterized in that**, after engagement of the motor-side gearwheel (27) and the gear-side gearwheel (28), the motor (12) is actuated in such a way that it is operated at a speed N_{M}↗ which is slightly higher than the speed N_{z} of the pull and/or push rod (11) or at a slightly reduced speed N_{M}↘.

5. Method according to one of claims 1 to 4, **characterized in that** the motor (12) is operated for carrying out a change in clamping force
- over a specified period of time and/or
- over a specified rotational speed ΔN_{M} and/or
- until a desired new target spring force Fₛₒₗₗ is detected, for example via sensor devices (38).

6. Method according to one of claims 1 to 5, **characterized in that** the coupling device comprises electromotive actuators (18) which are electrically actuated to carry out the coupling process.

7. Method according to one of claims 1 to 6, **characterized in that** the motor (12) is designed as an electric motor and is electrically actuated in order to carry out the coupling process.

8. Method according to one of claims 1 to 7, **characterized in that** it is detected whether the displaceable gearwheels (27, 28) have assumed an end position.

9. Method according to one of the claims 1 to 8, **characterized in that** the respective current position p₁(t), p₂(t) of the gearwheel(s) (27, 28) is detected.

10. Method according to one of claims 1 to 9, **characterized in that** the current rotational speed N_{z} of the pull and/or push rod (11) is detected by means of sensors (66) arranged on or in the clamping device or is transmitted by the machine tool.

11. Method according to one of claims 1 to 10, **characterized in that** the current rotational speed N_{M} of the motor is detected by means of sensors (65) arranged on or in the clamping device or is transmitted directly by the motor controller.

12. Method according to one of claims 1 to 11, **characterized in that** the position correction step comprises rotating the motor-side gearwheel (27) relative to the gear-side gearwheel (28) and subsequently moving them towards each other again to bring them into coupling position.

13. Method according to claim 12, **characterized in that**, prior to rotating the motor-side gearwheel (27) and the gear-side gearwheel (28), the position correction step comprises slightly moving the motor-side gearwheel (27) and the gear-side gearwheel (28) away from each other so as not to damage the tooth flanks during rotation between the motor-side gearwheel (27) and the gear-side gearwheel (28).

14. Method according to one of claims 1 to 13, **characterized in that** the displacement of the motor-side gearwheel (27) and the gear-side gearwheel (28) relative to one another takes place in an axis parallel to the axis of the push and/or pull rod (11).

## Revendications

1. Procédé pour réaliser une opération d'accouplement entre un moteur (12) et des moyens de transmission (13) agissant sur une tige de traction et/ou de poussée (11) dans un dispositif de serrage pour une machine-outil, dans lequel la tige de traction et/ou de poussée (11) tourne pendant le fonctionnement du dispositif de serrage et des opérations de serrage sont produites par coulissement axial de la tige de traction et/ou de poussée, un mouvement de rotation produit par un moteur (12) par l'intermédiaire des moyens de transmission (13), par exemple par l'intermédiaire d'un entraînement à broche ou d'un entraînement à vis à rouleaux planétaires (31), étant transformé sur la tige de traction et/ou de poussée en un coulissement axial et/ou une force axiale,
dans lequel le dispositif d'accouplement (14) comprend une roue dentée côté moteur (27) et une roue dentée côté transmission (28) qui peuvent être déplacées sur une course de coulissement prédéfinie S et ainsi mises en prise (position d'accouplement) ou hors prise (position de repos),
dans lequel un processus d'approche de la roue dentée côté moteur (27) et de la roue dentée côté transmission (28) est effectué pour mettre celles-ci en prise ou en position d'accouplement,
**caractérisé en ce que**
dans le processus d'approche, on surveille, dans une étape de surveillance, si la roue dentée côté moteur (27) et la roue dentée côté transmission (28) sont entrées en prise et, en fonction du résultat de l'étape de surveillance, une correction de position est éventuellement effectuée dans une étape de correction de position.

2. Procédé selon la revendication 1, **caractérisé en ce que**, contrairement à la tige de traction et/ou de poussée (11), le moteur (12) ne tourne pas pendant le fonctionnement de la machine-outil.

3. Procédé selon la revendication 1, **caractérisé en ce que**, pour effectuer une opération d'accouplement de la tige de traction et/ou de poussée (11) qui tourne à une vitesse de rotation N_{Z} prédéfinie pendant le fonctionnement de la machine-outil avec un moteur (12) qui ne tourne pas avec la tige de traction et/ou de poussée (11), un processus de synchronisation est effectué,
lequel processus de synchronisation consiste à
- détecter la vitesse de rotation N_{Z} de la tige de traction et/ou de poussée (11),
- commander et, le cas échéant, surveiller le moteur (12) de façon qu'il tourne à une vitesse N_{M} correspondant à N_{Z} et
- approcher et accoupler la roue dentée côté moteur (27) et la roue dentée côté transmission (28) lorsque N_{Z} = N_{M} est assuré.

4. Procédé selon la revendication 3, **caractérisé en ce que**, après la mise en prise de la roue dentée côté moteur (27) et de la roue dentée côté transmission (28), le moteur (12) est commandé de telle sorte qu'il fonctionne à une vitesse de rotation N_{M} 71 légèrement accrue ou à une vitesse de rotation N_{M}↘ légèrement réduite par rapport à la vitesse de rotation N_{Z} de la tige de traction et/ou de poussée (11).

5. Procédé selon l'une des revendications 1 à 4, **caractérisé en ce que**, pour effectuer une modification de la force de serrage, on fait fonctionner le moteur (12)
- sur une période prédéfinie et/ou
- sur un nombre de tours prédéfini ΔN_{M} et/ou
- jusqu'à ce qu'une nouvelle force élastique de consigne Fₛₒₗₗ souhaitée soit détectée, par exemple par des dispositifs capteurs (38).

6. Procédé selon l'une des revendications 1 à 5, **caractérisé en ce que** le dispositif d'accouplement comprend des actionneurs à moteur électrique (18) qui sont commandés électriquement pour effectuer le processus d'accouplement.

7. Procédé selon l'une des revendications 1 à 6, **caractérisé en ce que** le moteur (12) est réalisé sous la forme d'un moteur électrique et est commandé électriquement pour effectuer le processus d'accouplement.

8. Procédé selon l'une des revendications 1 à 7, **caractérisé en ce que** l'on détecte si la ou les roues dentées coulissantes (27, 28) ont pris une position finale.

9. Procédé selon l'une des revendications 1 à 8, **caractérisé en ce que** la position actuelle respective p₁(t), p₂(t) de la ou des roues dentées (27, 28) est détectée.

10. Procédé selon l'une des revendications 1 à 9, **caractérisé en ce que** la vitesse de rotation actuelle N_{Z} de la tige de traction et/ou de poussée (11) est détectée au moyen de capteurs (66) disposés sur ou dans le dispositif de serrage ou transmise par la machine-outil.

11. Procédé selon l'une des revendications 1 à 10, **caractérisé en ce que** la vitesse de rotation actuelle N_{M} du moteur est détectée au moyen de capteurs (65) disposés sur ou dans le dispositif de serrage ou transmise directement par la commande de moteur.

12. Procédé selon l'une des revendications 1 à 11, **caractérisé en ce que** l'étape de correction de position consiste à faire tourner la roue dentée côté moteur (27) par rapport à la roue dentée côté transmission (28) puis à déplacer celles-ci à nouveau l'une vers l'autre pour les amener dans la position d'accouplement.

13. Procédé selon la revendication 12, **caractérisé en ce que** l'étape de correction de position consiste, avant de faire tourner la roue dentée côté moteur (27) et la roue dentée côté pignon (28), à écarter légèrement l'une de l'autre la roue dentée côté moteur (27) et la roue dentée côté transmission (28) pour ne pas endommager les flancs des dents lors de la rotation entre la roue dentée côté moteur (27) et la roue dentée côté transmission (28).

14. Procédé selon l'une des revendications 1 à 13, **caractérisé en ce que** le coulissement de la roue dentée côté moteur (27) et de la roue dentée côté transmission (28) l'une par rapport à l'autre s'effectue sur un axe parallèle à l'axe de la tige de traction et/ou de poussée (11).
